# EUROPEAN PATENT APPLICATION

(11) **EP 4 560 461 A1**
(43) Date of publication of application: **28.05.2025**
(21) Application number: 23212468.5
(22) Date of filing: 27.11.2023
(51) Int. Cl.: G06F 8/65, G06F 9/455

(54) **COMPUTING DEVICE AND METHOD FOR UPGRADING AN ACTIVE VIRTUAL MACHINE**

(71) Applicant: Adtran Networks SE, 98617 Meiningen (DE)
(72) Inventor: MAL, Manas, 560037 Bangalore (IN)
(74) Representative: Bratovic, Nino Maria

(57) **Abstract**

The invention provides a computing device and a computer-implemented method for upgrading an active original virtual machine, OVM (VM-1), within a Network Function Virtualization, NFV, service chain (1) implemented by a set of computing nodes (CN-i), to an active upgraded virtual machine, UVM (VM-1'), the method comprising at least steps of: setting (S02) the original virtual machine, OVM (VM-1), to a paused state;
obtaining (S06) currently used port information, CUPI, of the active original virtual machine, OVM (VM-1), to be upgraded;
disassociating (S07) all ports (P1, P2, P3) from the original virtual machine, OVM, in the paused state;
associating (S141) the disassociated ports (P1, P2, P3) with the upgraded virtual machine, UVM (VM-1'), based on the obtained currently used port information, CUPI; and
launching (S16) the upgraded virtual machine, UVM (VM-1').

## Description

### FIELD OF THE INVENTION

The present invention relates to a computing device capable of upgrading an active virtual machine as well as to a method for upgrading an active virtual machine.

### BACKGROUND OF THE INVENTION

The usage of cloud architectures and virtual functions, as compared to functions realized by dedicated hardware, offers many advantages, among them, perhaps most importantly, flexibility and re-usability. Instead of the expensive physical replacement when a hardware component reaches its end of life, often a simple upgrade of a virtual machine will suffice. However, even when virtual machines are used instead of hardware components, such upgrades still have the potential to disrupt the virtual network functions.

Fig. 1 shows a schematic depiction of a set of computing nodes CN-1, CN-2,..., CN-7 (hereafter sometimes individually or collectively designated as CN-i) which form an underlying cloud, for example a uCPE (universal Customer Premise Equipment) or a cloudlet. In the shown example, every computing node CN-1, CN-2,...,CN-7 runs a corresponding virtual machine VM-1, VM-2,...,VM-7 (hereafter sometimes individually or collectively designated as VM-i). It shall be understood that any computing node CN-i may be running one, zero, or multiple virtual machines VM-i, depending on the circumstances.

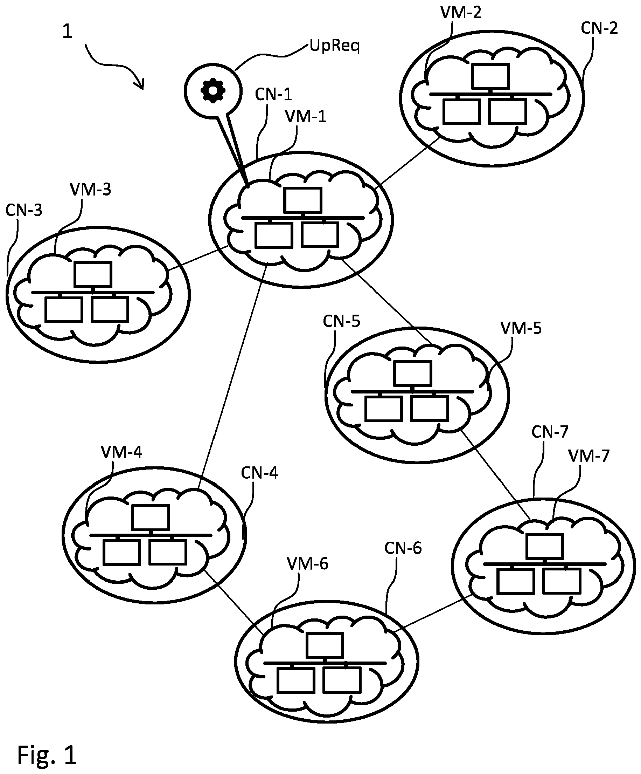

Together, the virtual machines VM-i may form, or provide, an application. A network functions virtualization, NFV service chain 1, as schematically depicted in Fig. 1, is a series of virtual machines VM-i, providing network functions. Individual virtual machines VM-i may provide a firewall functionality, a router functionality, and so on, just as their physical counterpart would.

From time to time, individual virtual machines VM-i need to be upgraded, for example because they need to be provided with additional or different resources (i.e., its flavor needs to be upgraded) or because their content needs to be changed (i.e., its image needs to be upgraded). In Fig. 1, the virtual machine VM-1 on computing node CN-1 is the object of an upgrade request UpReq. Evidently, upgrading this virtual machine has the potential of disrupting the entire NFV service chain 1.

EP 3 182 678 A describes a method for upgrading a network function virtualization application which enables changing images but not flavors of virtual machines, and requires a re-wiring of the data path to steer the traffic.

US 8 458 392 B2 describes a method of upgrading of a guest operating system of an active virtual machine. However, this method does not take into account the effects on the networking of the active virtual machine that is being upgraded, and requires considerable resources.

US 2014 0 189 677 A1 describes a method of a migration and an upgrade of virtual machines in cloud environments. The method does not consider, nor enable, a change of flavor of a virtual machine.

US 2014 0 157 264 A1 describes techniques for updating a host operating system on a server while maintaining virtual machines running on the server. These techniques do not consider the entirety of the image of the virtual machine, only the host operating system, and does not enable a change of flavor.

### Summary of the invention

It is an objective of the present invention to provide a method for upgrading an active virtual machine causing the least possible disruption and requiring the least possible resources. It is a further objective to provide a computing device implementing a virtual-infrastructure manager capable of implementing such a method.

These objectives are fulfilled by the subject matter of the independent claims.

Therefore, according to a first aspect, the present invention provides a computer-implemented method for upgrading an active original virtual machine, OVM, within a Network Function Virtualization, NFV, service chain implemented by a set of computing nodes, to an active upgraded virtual machine, UVM , comprising at least steps of:
setting the original virtual machine, OVM, to a paused state (or: read-only state);
obtaining (e.g., receiving or determining) currently used port information, CUPI, of the active original virtual machine, OVM, to be upgraded;
disassociating all ports (or: the port, in case of only one port) from the original virtual machine, OVM, in the paused state;
associating the disassociated ports (or: the port, in case of only one port) with the upgraded virtual machine, UVM, based on the obtained currently used port information, CUPI; and launching the upgraded virtual machine, UVM.

Here and in the following, for some (especially longer) terms abbreviations (such as "OVMID" for "original virtual machine image data" and the like) are used. Usually, the terms will be given followed by the corresponding abbreviations. In some cases, to improve legibility, only the abbreviation will be used, whereas in other cases only the term itself will be used. In all cases, the term itself and the corresponding abbreviation shall be understood to be equivalent.

The original, un-upgraded virtual machine, will generally be designated as the original virtual machine, OVM, in order to distinguish it from the later upgraded virtual machine, UVM.

The term "active virtual machine" indicates that said virtual machine is currently active, i.e., performing functions and/or providing functionalities, for implementing an application, for example an NFV service chain. Upgrading a virtual machine that is not currently in use is comparatively trivial; upgrading an active virtual machine, by contrast, poses significant difficulties. Active virtual machines, in particular, comprise active ports from/to which network traffic is transmitted/directed. The number of ports may be one or more, depending on the application, the architecture, the resources, the connected networks and so on.

Any virtual machine, as described herein, may be characterized by its flavor, and its image. The flavor describes the resources that are available to the virtual machine, corresponding to the hardware resources of a physical machine. For example, a physical router may have a certain amount of data storage capacity, a certain amount of random access memory (RAM), a certain amount of processing power (i.e., one or more central processing unit, CPU, cores), and so on. Virtual machines, which in a sense emulate or simulate physical machines, are created with similar resources, which are, however, provided by the underlying cloud, specifically the computing node implementing the virtual machine. Since often no single virtual machine should be allowed to use up the resources of the entire computing node, the flavor of the virtual machine sets the limitations of the virtual machine.

The image, on the other hand, characterizes the content, and with it the functions, of the virtual machine.

Upgrading in the present context means changing either the flavor or the image, or both, of a virtual machine in any way. Upgrading the flavor does therefore not need to increase the resources available to the virtual machine, as it may also comprise a downsizing of one or more of the resources. Also, some resources may be increased and/or other decreased and/or still others may remain the same as a result of the upgrading.

Similarly, upgrading the image does not necessarily mean adding or improving on functionalities of the virtual machine, and may just as well comprise reducing functionalities, for example, when a certain functionality is obsolete, no longer desired, rarely used, or the like.

The currently used port information, CUPI, comprises data about which of the ports are used in which way by the and how they are connected within the underlying cloud, for example a VNF service chain. The CUPI is advantageously given as an ordered list of port IDs, and may specifically comprise a virtual network interface card, VNIC, type, a MAC address, and an IP address.

The main advantages of the present invention are that the upgrade of a virtual machine is achieved without disrupting the networking, i.e., without the need to rewrite any datapath flow, and that it is achieved with minimum resource requirements.

An especially fruitful application of the present invention is when the underlying cloud is a universal customer premises equipment, uCPE, or any other cloud architecture where the virtual machine to be upgraded is networked, data traffic is flowing, and it is important to keep the networking intact as well as keep the resource usage to a minimum due to constrained hardware resources.

In some advantageous embodiments, refinements, or variants of embodiments, the method further comprises
obtaining target virtual machine image data, TVMID, and target virtual machine flavor data, TVMFD, of the desired upgraded virtual machine, UVM. Preferably, the upgraded virtual machine, UVM, is launched with the target virtual machine image data, TVMID, and the target virtual machine flavor data, TVMFD.

The target virtual machine image data, TVMID, may be (the same as or) different from original virtual machine image data, OVMID, of the original virtual machine, OVM. The upgrade process may thus comprise an image change, for example upgrading to a newer (or downgrading to an older) version of an operating system, to a different operating system altogether, and/or the like.

The target virtual machine flavor data, TVMFD, may be (the same as or) different from original virtual machine flavor data, OVMFD, of the original virtual machine, OVM, to be upgraded. The upgrade process may thus comprise a flavor change, for example increasing, decreasing, or simply changing the resource footprint of the virtual machine to be upgraded.

Preferably, at least the target virtual machine image data, TVMID, are different from the original virtual machine image data, OVMID, or the target virtual machine flavor data, TVMFD, are different from the original virtual machine image flavor, OVMFD, or both.

Obtaining the TVMID and the TVMFD may comprise receiving one or both of them, especially one that is different from the corresponding OVMID or OVMFD, respectively. In case that one or both of the TMVID and the TMVFD are the same as the corresponding OVMID or OVMFD, respectively, the obtaining may instead comprise receiving the information that the OVMID or OVMFD, respectively, are to be continued to be used.

In some advantageous embodiments, refinements, or variants of embodiments, the method further comprise claiming, based on the obtained target virtual machine flavor data, TVFMD, resources on a target computing node of the set of computing nodes. The target computing node may be the same computing node on which the original virtual machine, OVM, is implemented.

In some advantageous embodiments, refinements, or variants of embodiments, the method further comprises, at least in case the target virtual machine flavor data, TVMFD, are different from the original virtual machine flavor data, OVMFD, steps of:
calculating a difference in resources between the target virtual machine flavor data, TVMFD and the original virtual machine flavor data, OVMFD; and
checking whether resources according to the calculated difference are available in an underlying cloud implementing the NFV service chain, preferably in particular on the target computing node;
wherein the disassociating of the ports is only performed if a result of the check is positive, and wherein, if the result of the check is negative, a rollback procedure is started.

In some advantageous embodiments, refinements, or variants of embodiments, the resources claimed on the target computing node are equal to the calculated difference in resources, if said difference is positive (i.e., in case the target virtual machine flavor data, TVMFD, require more resources than the original virtual machine flavor data, OVMFD). In this way, the resources eventually freed by deleting the original virtual machine, increased by the additional resources claimed according to the calculated difference, are exactly equal to the resource demands according to the target virtual machine flavor data, TVMFD, preferably all provided by the same target computing node.

Of course, in case the target virtual machine flavor data, TVMFD, require less (or equal) resources than the original virtual machine flavor data, OVMFD, then the difference would be negative (or zero), and no (additional) resource claim would be made, or, put differently, the resource claim would be made for only the resources that are going to be freed by deleting the original virtual machine, OVM, or even only a part of those. The upgraded virtual machine, UVM, would then be launched using the resources (or part of them) freed by the deleting of the original virtual machine, OVM.

In some advantageous embodiments, refinements, or variants of embodiments, the method further comprises a step of deleting the original virtual machine, OVM, in the paused state. In this way, the available resources are used to the maximum, and there may even be more free resources than before the upgrading.

In some advantageous embodiments, refinements, or variants of embodiments, the upgraded virtual machine, UVM, is launched using the resources freed by deleting the original virtual machine, OVM (or a part thereof in case of lower requirements). In case the calculated difference in resources is positive, i.e., when the target virtual machine flavor data, TVMFD, demand more resources than the original virtual machine flavor data, OVMFD, then the upgraded virtual machine, UVM, is launched using the resources freed by deleting the original virtual machine, OVM, as well as the additional resources claimed on the target computing node according to the calculated difference. As has been described in the foregoing, this minimizes the overall resource requirements especially during the upgrading of the original virtual machine, OVM, to the upgraded virtual machine, UVM.

In some advantageous embodiments, refinements, or variants of embodiments, before the original virtual machine, OVM, in the paused state is deleted, a step of checking whether the target virtual machine flavor data, TVMFD, and the target virtual machine image data, TVMID, are available in the cloud virtual infrastructure manager, CVIM, is performed. If a result of this checking is positive, the step of deleting the original virtual machine, OVM, in the paused state is performed. If the result of this checking is negative, the disassociated ports and, if applicable, persistent storage, are re-associated with (or: re-attached to) the original virtual machine, OVM, and a rollback procedure is started. This provides an additional failsafe before the - generally non-undoable - step of deleting the original virtual machine, OVM, is performed.

In some advantageous embodiments, refinements, or variants of embodiments, the method further comprises a step of disassociating (or: detaching) a persistent data storage from the original virtual machine, OVM, to be upgraded, in its paused state. Preferably, this is only done when the check whether resources according to the calculated difference are available, has yielded a positive result. Specifically, it may be performed before, while, or after the disassociating of the ports. In any case, the persistent data storage is preferably disassociated (or: detached) before the deleting of the original virtual machine, OVM, in its paused state.

The method may further comprise a step of (re-)associating the persistent data storage with the (active) upgraded virtual machine, UVM, after the launching of the upgraded virtual machine, UVM. In this way, the upgraded virtual machine, UVM, has access to all data provided by the persistent data storage, which advantageously comprise application data, databases, and the like.

In some advantageous embodiments, refinements, or variants of embodiments, the rollback procedure comprises steps of: unpausing the original virtual machine, OVM;
releasing the claimed resources on the target computing node; and generating a message indicating a failure of an upgrading attempt. The message may include simply the fact of the failure, or, advantageously, additional items of information, such as a time of the failure, a cause of the failure, a possible remedy for the failure and/or the like. In some cases, the message may comprise a control signal configured to automatically remedy the cause of the failure and to restart the upgrade process, i.e., the method according to the present invention.

In some advantageous embodiments, refinements, or variants of embodiments, the port information, PI, comprises an ordered list of port identification data, each item of port identification data indicating, for a particular port according to the ordered list, a virtual network interface card, VNIC, type, a media access control, MAC, address, and/or an internet protocol, IP, address - preferably all three (VNIC, MAC, and IP). With these data, the networking environment of the original virtual machine, OVM, is sufficiently captured so that it can be smoothly transferred to the upgraded virtual machine, UVM.

According to a second aspect of the present invention, a computing device implementing a virtual-infrastructure manager, VIM, (or: network controller) for a cloud underlying a Network Function Virtualization, NFV, service chain, is provided, the NFV service chain being implemented by a set of computing nodes, the VIM being configured to perform the method according to any embodiment of the first aspect of the present invention.

The computing device may be realized as any device, or any means, for computing, in particular for executing a software, an app, or an algorithm. For example, the computing device may comprise at least one processing unit such as at least one central processing unit, CPU, and/or at least one graphics processing unit, GPU, and/or at least one field-programmable gate array, FPGA, and/or at least one application-specific integrated circuit, ASIC and/or any combination of the foregoing. The computing device may further comprise a working memory operatively connected to the at least one processing unit and/or a non-transitory memory operatively connected to the at least one processing unit and/or the working memory. The computing device may be implemented partially and/or completely in a local apparatus and/or partially and/or completely in a remote system such as by a cloud computing platform.

According to a third aspect, the invention provides a computer program product comprising executable program code configured to, when executed, perform the method according to any embodiment of the first aspect of the present invention.

According to a fourth aspect, the invention provides a non-transient computer-readable data storage medium comprising executable program code configured to, when executed, perform the method according to any embodiment of the first aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to any embodiment of the first aspect of the present invention.

Further technical considerations, advantages as well as variants and refinements are presented in the following, in particular in the dependent claims as well as in the specification with respect to the drawings and the drawings themselves.

### BRIEF DESCRIPTION OF THE DRAWINGS

The invention will be explained in greater detail with reference to exemplary embodiments depicted in the drawings as appended.

The accompanying drawings are included to provide a further understanding of the present invention, are incorporated in, and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts. The numbering of method steps is done for the purpose of distinguishing between them and does not necessarily imply a temporal order although a temporal order according to the numbering is possible. In particular, one or more method steps may be performed at the same time, overlapping one another and/or the like. Although the method is presented herein in a comprehensive manner including several steps, it shall be understood that most of the steps are not essential and only provide advantageous additional benefit.

In the figures:
- Fig. 1: shows a schematic illustration of a cloud architecture for explaining the basic premises of the present invention;
- Fig. 2: shows a flow diagram schematically illustrating a method according to an embodiment of the first aspect of the present invention;
- Fig. 3 to Fig. 7: show schematic depictions of starting, intermediate and final states of parts of an NFV service chain while a virtual machine is being upgraded using the method of Fig. 2;
- Fig. 8: shows a schematic block diagram for illustration of a computing device according to another embodiment of the present invention;
- Fig. 9: shows a schematic block diagram of a computer program product according to an embodiment of the third aspect of the present invention; and
- Fig. 10: shows a schematic block diagram of a data storage medium according to an embodiment of the fourth aspect of the present invention.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### DETAILED DESCRIPTION OF THE DRAWINGS

Fig. 1, as has been described in the foregoing, shows a schematic starting point for the method according to the present invention. It has been described how networking virtual machines VM-i need to be upgraded from time to time, and how doing so potentially disrupts the function of the uCPE or cloudlet to which they are contributing or which they are forming. The present invention minimizes this disruption.

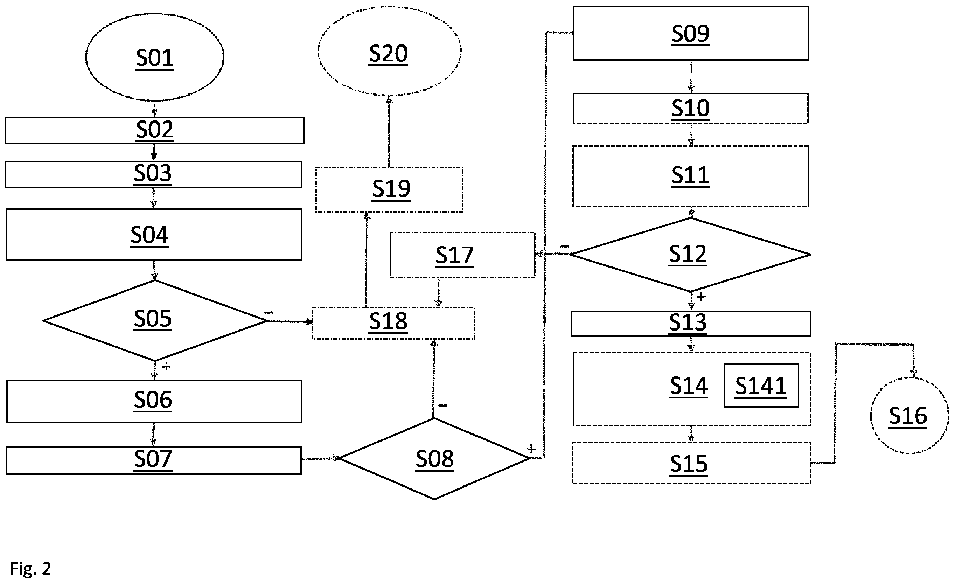

Fig. 2 shows a schematic flow diagram illustrating a method according to an embodiment of the first aspect of the present invention, i.e., a method for upgrading an active virtual machine, or, in other words, for changing the image or flavor of an active virtual machine. The active virtual machine to be upgraded is also designated as the original virtual machine, OVM, in order to distinguish it from the upgraded virtual machine.

In Fig. 2, for easier reference, all steps generally (or completely) associated with the original virtual machine, OVM, are indicated by shapes with full lines, all steps generally associated with the upgraded virtual machine, UVM, are indicated by shapes with dashed lines, and all steps belonging to an error and/or rollback procedure are indicated by shapes with dot-dashed lines.

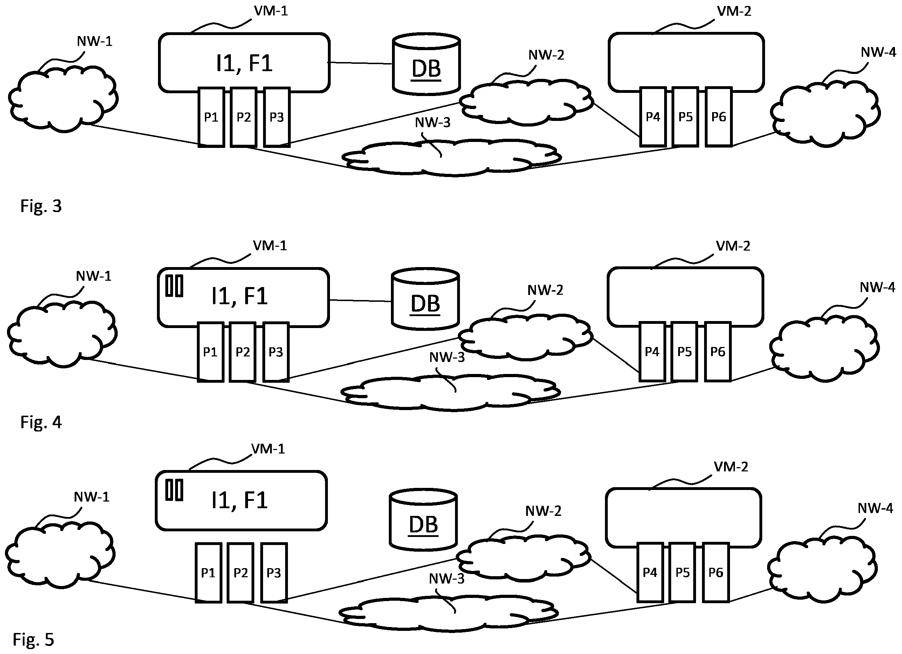

Fig. 3 through Fig. 7 will schematically illustrate the method according to the method of Fig. 2 further. To this end, Fig. 3 shows a schematic network architecture implementing a VNF service chain 1 having a first active virtual machine VM-1, and a second virtual machine VM-2. The first virtual machine VM-1 is characterized by its original virtual machine image data, OVMID I1, and its original virtual machine flavor data, OVMFD F1. The original virtual machine flavor data, OVMFD F1, may, for example, indicate resources at the disposal of the active virtual machine VM-1 of: 2 virtual CPUs, 2 GB random access memory, RAM, 100GB disk memory. The original virtual machine image data, OVMID I1, may for example be a Palo Alto (registered trademark) 9.0 operating system.

The active virtual machine VM-1 interacts with the VNF service chain 1 via its ports P1, P2, P3 (here three ports merely as an example). Its first port P1 is connected to a first network, for example a local area network, LAN NW-1. Its second port P2 is connected to a second network, for example a management network NW-2, and its third port P3 is connected to a third network, for example a computing network NW-3. Moreover, the active virtual machine VM-1 may be connected to a persistent data storage DB, which may be used for application data.

The computing network NW-3 may then be connected to a first port P4 of the second virtual machine VM-2, and the management network NW-2 to a second port P5 of the second virtual machine VM-2. A third port P6 of the second virtual machine VM-2 may be connected to a fourth network, for example a wide area network, WAN NW-4. The second virtual machine VM-2 may implement, for example, a firewall.

In a step S01, an upgrade request UpReq for a currently active virtual machine VM-1 is received, and the computer-implemented method for upgrading this active original virtual machine (OVM) VM-1 is started. Fig. 3 illustrates the state of the VNF service chain 1 in which the upgrade request UpReq is received.

A part of the upgrade request in step S01, target virtual machine image data, TVMID I2, and/or target virtual machine flavor data, TVMFD F2, are obtained, for example as part of the upgrade request. The target virtual machine image data, TVMID I2, may be identical to the original (current) virtual machine image data, OVMID I1, or the target virtual machine flavor data, TVMFD F2, may be identical to the original (current) virtual machine flavor data, OVMFD F1.

In other words, the upgrade may comprise, or consist of, specifically an upgrade only in the image or only in the flavor, or in both image and flavor. As has been described in the foregoing, an upgrade does not necessarily mean an increase in resources (or: footprint), an improvement in capabilities or an addition of functionalities - it may also comprise, or consist of, a decrease in resources (or: footprint), a reduction of functionalities, and so on. Some processes that could be described as downgrades may therefore also be comprised by the term "upgrade" as used herein.

The upgrade request may also comprise onboarding user data.

In a step S02, the current active original virtual machine VM-1 is put into a paused (or: read-only) state, so that it, and in particular its database, cannot be altered. This state is schematically shown in Fig. 4.

In a step S03, a difference in resources between the target virtual machine flavor data, TVMFD F2, and the original virtual machine flavor data, OVMFD F1, is determined, in particular calculated. For example, if the OVMFD F1 comprise, or consist of, 2 vCPU, 2 GB RAM, 80 GB Disk, and the TVMFD F2 comprise, or consist of, 4 vCPU, 4 GB RAM, and 100 GB Disk, then the difference is calculated to 2 vCPU, 2 GB RAM and 20 GB Disk.

In a step S04, based on the obtained target virtual machine flavor data, TVFMD F2, resources on a target computing node CN-i of the set of computing nodes are claimed. The target computing node CN-i may be the same computing node CN-1 on which the original virtual machine VM-1 is running, or a different computing node CN-j, j>1. The optimal use of resources is achievable when, advantageously, the target computing node CN-i is the same computing node CN-1 on which the original virtual machine VM-1 is running. In that case, only resources according to the difference in resources between the target virtual machine flavor data, TVMFD F2, and the old virtual machine flavor data, OVMFD F1, need to be claimed in addition to the resources currently claimed by the original virtual machine, OVM VM-1.

In a step S05, it is checked whether the difference in resources calculated in step S03 is available to spin up the upgraded virtual machine, UVM, with the target virtual machine flavor data, TVMFD F2. If this is not the case ("-" symbol with step S05 in Fig. 2), then a rollback procedure (S18-S20) will be started, as will be described in more detail in the following. If this is the case, i.e., if the result of the checking S05 is that the difference is enough ("+" symbol in Fig. 2), then the method proceeds as follows:
In a step S06, currently used port information, CUPI, of the active original virtual machine, OVM VM-1, to be upgraded, is obtained, for example received or determined. The management layer or the orchestration layer may have stored all details of the NFV service chain 1, having fetched them from the underlying cloud. The currently used port information, CUPI, comprises data about which of its ports P1, P2, P3 are used in which way by the OVM VM-1 and how they are connected within the VNF service chain. The CUPI is advantageously given as an ordered list of port IDs, and may specifically comprise a virtual network interface card, VNIC, type, a MAC address, and an IP address.

For example, in case of two ports, the ordered list may look as follows:
1) Port-id {id:1,vnic-type:virtio,mac:fa:16:3e:09:82:63, IP:10.10.64.200}
2) Port-id {id:2,vnic-type:sriov,mac:fa:16:3e:dd:15:c2, IP:10.10.61.10}

The currently used port information, CUPI, thus encapsulates the entire networking of the original virtual machine, OVM VM-1, i.e. the entirety of its interaction within the VNF service chain 1.

In a step S07, all of the ports P1, P2, P3 associated with the original virtual machine, OVM VM-1, are disassociated from it. More specifically, the attempt is made to disassociated the ports P1-P3 from it.

In a step S08, it is checked whether the port detachment has succeeded. If this is not the case ("-" symbol with step S08), then the rollback procedure (S18-S20) is performed. The positive case ("+" system with step S08), i.e. the case that the port detachment has succeeded, is schematically depicted in Fig. 5.

The ports P1-P3 are still connected with the LAN NW-1, the computing network NW-2 and the management network NW-3, and vice versa. Data sent to these ports P1-P3 will not reach the original virtual machine, OVM VM-1, disassociated from them in this state. Preferably, the method is performed during a maintenance interval, in which the probability is reduced that in this way any important data are lost or processes are interrupted.

In case the port attachment succeeded ("+" at step S08 in Fig. 2), the data storage DB is disassociated from the original virtual machine, OVM VM-1.

Then, in a step S10, the target virtual machine image data, TVMID, are uploaded to a data repository, in particular a data repository of a virtual-infrastructure manager, VIM, of the underlying cloud. In a step S11, the target virtual machine flavor data, TVMFD F2, are created in the virtual-infrastructure manager, VIM. Uploading S10 the TVMID and the TVMFD to the data repository may be combined with implementing the new virtual machine image data, TVMID, and the new virtual machine flavor data, TVFMD, in a cloud virtual infrastructure manager, CVIM, for the set of computing nodes.

In a step S12, it is checked whether step S10 and S11 where successful, i.e., whether the target virtual machine flavor data, TVMFD F2, and the target virtual machine image data, TVMID I2, are available at the virtual-infrastructure manager, VIM. If this is not the case ("-" symbol at step S12 in Fig. 2), then, in a step S17, the ports P1-P3 and the persistent data storage, DB, are re-associated (or: re-attached) to the original virtual machine, OVM VM-1. In other words, the steps S07 and S09 are undone. Thereafter, the roll back process S18-S20 is performed.

In case the check in step S12 was successful, i.e., when the target virtual machine image data, TVMID I2, and the target virtual machine flavor data, TVMFD F2, are available in the virtual-infrastructure manager, VIM, this case being indicated by the "+" symbol at step S12 in Fig. 2, then, in a step S13, the original virtual machine, OVM VM-1, still in its paused state, is deleted.

Thereafter, in a step S14, the upgraded virtual machine, UVM VM-1', is launched, using the target virtual machine image data, TVMID I2, the target virtual machine flavor data, TVMFD F2, and the determined and stored currently used port information, CUPI, as well as - optionally - any other data that may have been stored or provided.

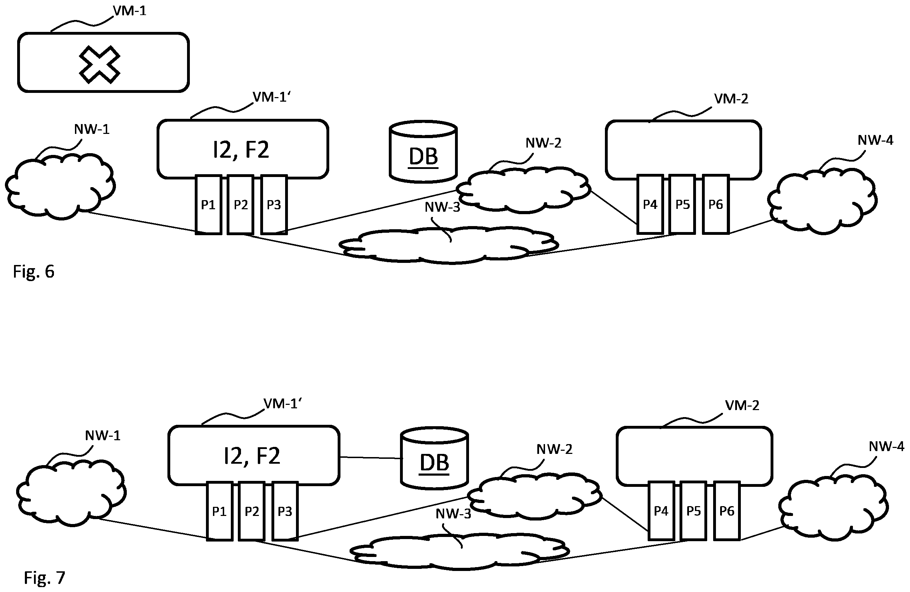

Step S14 may therefore comprise a step S141 of associating (or: re-associating) the ports P1, P2, P3 with the upgraded virtual machine, UVM VM-1'. Thus, the UVM VM-1' is now associated with the ports P1-P3 so that the UVM VM-1' can be seen and interacted with by the other virtual machines VM-2 and networks NW-2, NW-3, NW-4 of the VNF service chain in just the same way as the original virtual machine, OVM VM-1. This state is depicted schematically in Fig. 6.

In a step S15, the persistent data storage, DB, is associated with (or: attached, or: re-associated, or re-attached) to the upgraded virtual machine, UVM VM-1', just as it was previously associated with the original virtual machine, OVM VM-1.

In a step S16, the upgraded virtual machine, UVM VM-1' is launched with the target virtual machine image data, TVMID I2, and the target virtual machine flavor data, TVMFD F2, in particular using the resources claimed in step S04 on the target computing node as well as any resources freed by the deleting S13 of the original virtual machine, OVM VM-1. This step marks the end of the upgrade procedure, and may comprise sending a signal carrying a message that indicates successful completion of the upgrade, or satisfaction of the upgrade request UpReq. This state is depicted schematically in Fig. 7.

It will be apparent, by comparing Fig. 3 and Fig. 7, that to the VNF service chain 1 the total effect of the upgrading procedure is a very smooth replacement of the OVM VM-1 with the UVM VM-1', while causing the minimum disruption to networking and requiring the minimum amount of computing resources.

Returning to Fig. 2, a rollback procedure is provided in case that any errors occur, for example the ones for which specific checks have been provided such as in steps S05, S08, and/or S12. The rollback procedure comprises at least the following steps S18-S20:
In a step S18, the original virtual machine, OVM VM-1, is unpaused, i.e., the paused state is lifted, or, in other words, the OVM VM-1 is set from read-only back to read-and-write. Thus, in a step S19, the OVM VM-1 is set back to running, and in a step S20, the upgrade process is aborted. Step S20 may comprise sending a signal carrying a message indicating that the upgrade process was aborted, and optionally what kind(s) of error(s) occurred that necessitated the abortion.

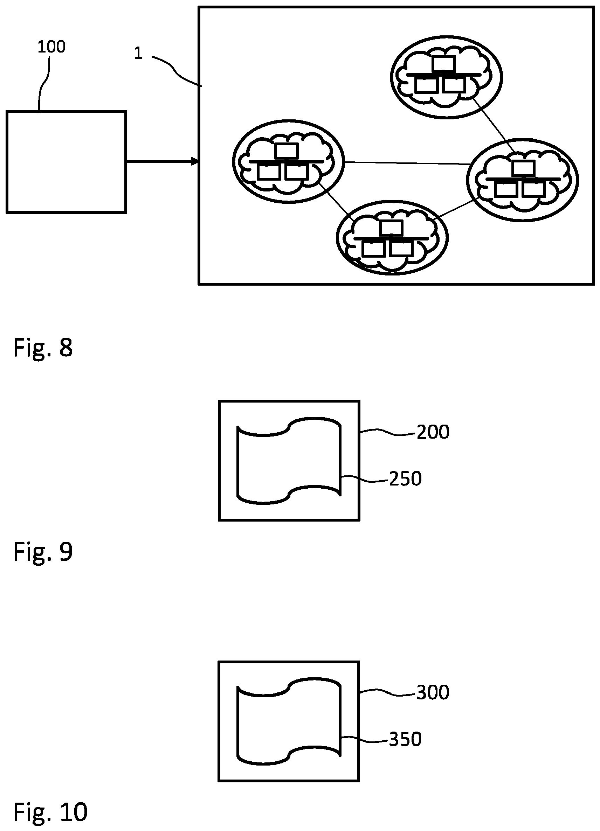

Fig. 8 shows a schematic depiction of a computing device 100, according to an embodiment of the second aspect of the present invention. The computing device 100 is configured to implement a virtual-infrastructure manager, VIM 110, which in turn is configured to perform the method according to any embodiment of the present invention, in particular the method as has been described in the foregoing with respect to Fig. 1-7. The computing device 100, and in particular the VIM 110, may therefore be provided with any feature, option, variant or refinement that has been described with respect to any method according to the present invention.

Fig. 9 shows a schematic block diagram illustrating a computer program product 200 according to an embodiment of the third aspect of the present invention. The computer program product 200 comprises executable program code 250 configured to, when executed, perform the method according to any embodiment of the first aspect of the present invention, in particular as has been described with respect to the preceding figures.

Fig. 10 shows a schematic block diagram illustrating a non-transitory computer-readable data storage medium 300 according to an embodiment of the fourth aspect of the present invention. The data storage medium 300 comprises executable program code 350 configured to, when executed, perform the method according to any embodiment of the first aspect of the present invention, in particular as has been described with respect to the preceding figures.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: virtual network functions, VNF, service chain

- 100: computing device
- 110: virtual-infrastructure manager, VIM
- 200: computer program product
- 250: program code
- 300: data storage medium
- 350: program code

- CN-i: computing node
- DB: data storage
- F1: original virtual machine flavor data
- F2: target virtual machine flavor data
- I1: original virtual machine image data
- I2: target virtual machine image data
- NW-i: network
- P1: first port
- P2: second port
- P3: third port
- P4-P6: ports of the second virtual machine
- S01..S20: method steps
- UpReq: upgrade request
- VM-i: virtual machine

## Claims

1. A computer-implemented method for upgrading an active original virtual machine, OVM (VM-1), within a Network Function Virtualization, NFV, service chain (1) implemented by a set of computing nodes (CN-i), to an active upgraded virtual machine, UVM (VM-1'), comprising at least steps of:
setting (S02) the original virtual machine, OVM (VM-1), to a paused state;
obtaining (S06) currently used port information, CUPI, of the active original virtual machine, OVM (VM-1), to be upgraded;
disassociating (S07) all ports (P1, P2, P3) from the original virtual machine, OVM, in the paused state;
associating (S141) the disassociated ports (P1, P2, P3) with the upgraded virtual machine, UVM (VM-1'), based on the obtained currently used port information, CUPI; and
launching (S16) the upgraded virtual machine, UVM (VM-1').

2. The method of claim 1, comprising further steps of:
obtaining (S01) information indicating target virtual machine image data, TVMID (12) of the desired upgraded virtual machine, UVM (VM-1') and target virtual machine flavor data, TVMFD (F2), of the desired upgraded virtual machine,
UVM (VM-1');
claiming (S04), based on the obtained target virtual machine flavor data, TVFMD (F2), resources on a target computing node of the set of computing nodes (CN-i); and
wherein the upgraded virtual machine, UVM (VM-1') is launched with the target virtual machine image data, TVMID (I2), and the target virtual machine flavor data, TVMFD (F2).

3. The method of claim 2,
wherein the target virtual machine image data, TVMID (I2), are different from original virtual machine image data, OVMID (I1), of the original virtual machine, OVM (VM-1); and/or wherein the target virtual machine flavor data, TVMFD (F2), are different from original virtual machine flavor data, OVMFD (F1), of the original virtual machine, OVM (VM-1), to be upgraded.

4. The method of claim 3, further comprising, in case the target virtual machine flavor data, TVMFD (F2), are different from the original virtual machine flavor data, OVMFD (F1), steps of:
calculating (S03) a difference in resources between the target virtual machine flavor data, TVMFD (F2), and the original virtual machine flavor data, OVMFD (F1); and
checking (S05) whether resources according to the calculated difference are available in an underlying cloud implementing the NFV service chain (1), in particular on the target computing node;
wherein the disassociating (S06) of the ports (P1, P2, P3) is only performed if a result of the check (S05) is positive,
and wherein, if the result of the check (S05) is negative, a rollback procedure (S18-S20) is started.

5. The method of claim 4,
wherein the resources claimed (S04) on the target computing node are equal to the calculated (S03) difference in resources, if said difference is positive.

6. The method of any of claims 2 to 5, further comprising a step of deleting (S13) the original virtual machine, OVM (VM-1), in the paused state;
wherein the upgraded virtual machine, UVM (VM-1'), is launched (S16) using resources freed by deleting (S13) the original virtual machine, OVM (VM-1).

7. The method of claim 5 and claim 6,
wherein the upgraded virtual machine, UVM (VM-1'), is launched (S16) using the resources freed by deleting (S13) the original virtual machine, OVM (VM-1), as well as using the resources claimed (S04) on the target computing node equal to the calculated (S03) difference in resources, if said difference is positive.

8. The method of claim 6 or claim 7,
wherein, before the original virtual machine, OVM, in the paused state is deleted (S13), a step (S12) of checking whether the target virtual machine flavor data, TVMFD (F2), and the target virtual machine image data, TVMID (I2), are available in a virtual-infrastructure manager, VIM (110), is performed; and
wherein, if a result of this checking (S12) is:
- positive, the step of deleting (S13) the original virtual machine, OVM (VM-1), in the paused state is performed,
and if the result of this checking (S12) is:
- negative, the disassociated ports (P1, P2, P3) are re-associated (S17) with the original virtual machine, OVM (VM-1), and a rollback procedure (S18-S20) is started.

9. The method of any of claims 6 to 8, further comprising steps of:
disassociating (S07) a persistent data storage (DB) from the original virtual machine, OVM (VM-1), in the paused state before the deleting (S13) of the original virtual machine, OVM (VM-1); and
associating (S15) the persistent data storage (DB) to the upgraded virtual machine, UVM (VM-1'), after the launching (S14) of the upgraded virtual machine, UVM (VM-1').

10. The method of claim 4 or claim 8,
wherein the rollback procedure (S18-S20) comprises steps of:
unpausing (S18) the original virtual machine, OVM (VM-1);
releasing (S19) the claimed resources on the target computing node; and
generating (S20) a message indicating a failure of an upgrading attempt.

11. The method of any of claims 1 to 10,
wherein the currently used port information, CUPI, comprises an ordered list of port identification data, each item of port identification data indicating, for a particular port (P1, P2, P3) according to the ordered list, a virtual network interface card, VNIC, type, a media access control, MAC, address, and/or an internet protocol, IP, address.

12. A computing device (100) implementing a virtual-infrastructure manager (110) for a cloud (2) underlying a Network Function Virtualization, NFV, service chain (1) implemented by a set of computing nodes (CN-i) of the underlying cloud (2), the virtual-infrastructure manager device (110) being configured to perform the method of any of claims 1 to 11.

13. An assembly of a computing device (100) according to claim 12 and a cloud (2) underlying a Network Function Virtualization, NFV, service chain (1) implemented by a set of computing nodes (CN-i) of the underlying cloud (2).

14. A computer program product (200) comprising executable program code (250) configured to, when executed, perform the method of any of claims 1 to 11.

15. A non-transient, computer-readable data storage medium (300) comprising executable program code (350) configured to, when executed, perform the method of any of claims 1 to 11.
